# EUROPÄISCHE PATENTANMELDUNG

(11) **EP 1 944 074 A1**
(43) Veröffentlichungstag der Anmeldung: **16.07.2008**
(21) Anmeldenummer: 07006971.1
(22) Anmeldetag: 03.04.2007
(51) Int. Cl.: B01D 53/00, F25J 3/08, B01D 5/00

(54) **Verfahren und Vorrichtung zur fraktionierten Kryokondensation**

(30) Priorität: 11.01.2007 DE 102007001658
(71) Anmelder: Linde Aktiengesellschaft, 80807 München (DE)
(72) Erfinder: Himmen, Hans-Rudolf, 85778 Haimhausen (DE); Reinhardt, Hans-Jürgen, Dr., 87600 Kaufbeuren (DE); Wolf, Stefan, Dr., 85540 Haar (DE)

(57) **Zusammenfassung**

Die Erfindung betrifft ein Verfahren und eine Vorrichtung zur fraktionierten Kryokondensation eines Prozessgases (4,5,6,7) in mindestens einem Kühler (2) und einem Tiefkühler (3), wobei in dem Kühler (2) eine definierte Prozessgastemperatur eingestellt wird, und wobei das aus dem Kühler (2) abgezogene Kondensat (9) und das aus dem Tiefkühler (3) abgezogene Kondensat (10) getrennt voneinander gesammelt werden.

## Beschreibung

Die Erfindung betrifft ein Verfahren zum Kühlen und/oder Reinigen eines Prozessgases
- wobei das Prozessgas in einem Kühler in indirektem Wärmeaustausch mit einem zweiten Kühlmittelstrom vorgekühlt wird,
- wobei in dem Kühler entstehendes Kondensat aus dem Kühler abgezogen wird,
- und wobei das aus dem Kühler austretende Prozessgas in einem Tiefkühler in indirektem Wärmeaustausch mit einem ersten Kühlmittelstrom gekühlt wird,
- wobei in dem Tiefkühler entstehendes Kondensat aus dem Tiefkühler abgezogen wird,
und wobei zumindest ein Teil des aus dem Tiefkühler austretenden ersten Kühlmittelstroms dem Kühler zugeführt wird, um zumindest einen Teil des zweiten Kühlmittelstroms zu bilden.

Ferner bezieht sich die Erfindung auf eine Vorrichtung zum Kühlen und/oder Reinigen eines Prozessgases, umfassend
- einen als indirekten Wärmetauscher ausgeführten Kühler mit einer Prozessgaszuleitung und einer Prozessgasableitung und mit einer Kühlmittelzuleitung und einem Kühlmittelabzug,
- einen als indirekten Wärmetauscher ausgeführten Tiefkühler mit einer Prozessgaszuleitung und einer Prozessgasableitung und mit einer Kühlmittelzuleitung und einem Kühlmittelabzug,
- wobei die Prozessgasableitung des Kühlers mit der Prozessgaszuleitung des Tiefkühlers verbunden ist,
wobei der Kühlmittelabzug des Tiefkühlers mit der Kühlmittelzuleitung des Kühlers verbunden ist.

Bei der Kryokondensation werden Inhaltsstoffe, wie leichtflüchtige organische Komponenten (VOC), aus einem Prozessgas durch Abkühlung auf tiefe Temperaturen und Kondensation zurückgewonnen. Das Prozessgas wird hierbei in indirektem Wärmeaustausch mit einem Kälteträger abgekühlt.

Meist erfolgt die Abkühlung des Prozessgases in indirektem Wärmeaustausch mit einem Kälteträger in einem oder in mehreren Vorkühlern und einem Tiefkühler. In dem oder den Vorkühlern wird kaltes Gas, wie z.B. kalter gasförmiger Stickstoff oder das gereinigte tiefkalte Prozessgas, als Kälteträger verwendet. Im Tiefkühler kommt in der Regel flüssiger Stickstoff als Kälteträger zum Einsatz.

Durch die Kühlung des Prozessgases kondensieren die leichtflüchtigen Bestandteile des Prozessgases in den einzelnen Wärmetauschern aus. Die Zusammensetzung der dabei entstehenden Kondensate hängt von den im Prozessgas ursprünglich vorhandenen Komponenten und deren Zusammensetzung ab. Der Druck des Prozessgases und dessen Temperatur in den Wärmetauschern beeinflussen die Kondensatzusammensetzung ebenfalls. Die in den einzelnen Wärmetauschern gewonnenen Kondensate werden bisher in einem gemeinsamen Sammelbehälter zusammengeführt und anschließend wiederverwendet oder entsorgt.

In der Regel wird das beschriebene Kryokondensationsverfahren zur Abgasreinigung eingesetzt. Durch Festlegung der Temperatur des Prozessgases im Tiefkühler können die vorgegebenen Reinheitsanforderungen an das Prozessgas erfüllt werden.

Die Vorkühler werden bei diesen Verfahren mit dem bereits abgekühlten Prozessgas und/oder mit dem aus dem Tiefkühler austretenden Kälteträger, beispielsweise kaltem gasförmigen Stickstoff, gekühlt. Die Temperatur des Prozessgases in den Vorkühlern ist damit bei vorgegebenen Wärmeaustauschflächen in den Vorkühlern festgelegt. Je nach Temperatur des Prozessgases ist damit aber auch die Zusammensetzung der in den einzelnen Vorkühlern gewonnenen Kondensate vorbestimmt.

Das gewonnene Kondensat weist in der Regel mehrere unterschiedliche Komponenten auf. Sollen diese Komponenten wiederverwendet werden, muss das Kondensat erst aufwändig gereinigt werden.

Aufgabe der vorliegenden Erfindung ist es daher, ein Verfahren und eine Vorrichtung aufzuzeigen, die eine direkte Weiterverwendung der bei einem Kryokondensationsverfahren aus einem Prozessgas kondensierten Komponenten erlaubt.

Diese Aufgabe wird durch ein Verfahren der eingangs genannten Art gelöst, welches dadurch gekennzeichnet ist, dass
- der zweite Kühlmittelstrom so geregelt wird, dass in dem Kühler eine vorgegebene Prozessgastemperatur eingehalten wird und dass
- das aus dem Kühler abgezogene Kondensat und das aus dem Tiefkühler abgezogene Kondensat getrennt voneinander gesammelt werden.

Die erfindungsgemäße Vorrichtung der eingangs genannten Art zeichnet sich dadurch aus, dass der Tiefkühler und der Kühler mit einer Kondensatableitung zum Abziehen von in dem Tiefkühler bzw. in dem Kühler entstehendem Kondensat versehen sind, wobei die Kondensatableitung des Tiefkühlers mit einem ersten Kondensatbehälter und die Kondensatableitung des Kühlers mit einem zweiten Kondensatbehälter verbunden sind.

Erfindungsgemäß wird das zu kühlende und/oder zu reinigende Prozessgas zunächst in einem Kühler vorgekühlt und anschließend in einem Tiefkühler abgekühlt. Im Tiefkühler erfolgt die Abkühlung des Prozessgases in indirektem Wärmeaustausch mit einem ersten Kühlmittelstrom. Zumindest ein Teil des aus dem Tiefkühler austretenden ersten Kühlmittelstroms wird dann dem Kühler zur Vorkühlung des Prozessgases zugeführt und bildet somit zumindest einen Teil des zweiten Kühlmittelstroms.

Erfindungsgemäß wird nun der zweite Kühlmittelstrom so geregelt, dass in dem Kühler eine vorgegebene Prozessgastemperatur eingehalten wird. Bei der Abkühlung des Prozessgases entsteht sowohl im Kühler als auch im Tiefkühler Kondensat, welches aus dem Kühler bzw. Tiefkühler abgezogen wird. Durch die erfindungsgemäße Einstellung einer bestimmten Prozessgastemperatur in dem Kühler wird es möglich, die Zusammensetzung des in dem Kühler gewonnenen Kondensats gezielt zu beeinflussen und beispielsweise ein Kondensat definierter Reinheit aus dem Kühler abzuziehen. Die in dem Kühler bzw. Tiefkühler gewonnenen Kondensate werden erfindungsgemäß getrennt voneinander gesammelt, so dass diese ohne Nachreinigung einer Weiterverwendung zugeführt werden können.

Bei einer bevorzugten Ausführungsform des erfindungsgemäßen Verfahrens erfolgt die Abkühlung des Prozessgases nicht nur in einem Kühler und einem nachfolgenden Tiefkühler, sondern es wird dem Kühler noch mindestens ein Vorkühler vorgeschaltet. Das Prozessgas wird zunächst in dem Vorkühler in indirektem Wärmeaustausch mit einem dritten Kühlmittelstrom vorgekühlt, dann in den Kühler weitergeleitet und dort in indirekten Wärmeaustausch mit dem zweiten Kühlmittelstrom gebracht. Das so vorgekühlte Prozessgas wird schließlich in dem Tiefkühler auf die gewünschte Endtemperatur abgekühlt.

Bei dieser Verfahrensvariante wird von Vorteil auch der dritte Kühlmittelstrom, der als Kälteträger in dem Vorkühler dient, so geregelt, dass sich in dem Vorkühler eine vorgegebene Prozessgastemperatur einstellt. Der Vorkühler verfügt ebenso wie der Kühler und der Tiefkühler über einen Kondensatabzug, um bei der Vorkühlung bzw. Kühlung oder Tiefkühlung entstehendes Kondensat abzuziehen und in drei separate Kondensatbehälter abzuführen. Durch die erfindungsgemäße Beeinflussung der Prozessgastemperatur bei der Vorkühlung bzw. Kühlung und Tiefkühlung kann im Vorkühler, Kühler und im Tiefkühler jeweils ein Kondensat definierter Zusammensetzung gewonnen werden.

Analog zu der oben beschriebenen Verfahrensweise mit einem Vorkühler ist es selbstverständlich ebenso möglich, mehrere Vorkühler einzusetzen, die nacheinander von dem Prozessgas durchströmt werden, wobei vorzugsweise in jedem der Vorkühler die Temperatur des Prozessgases erfindungsgemäß in definierter Weise eingestellt wird.

Vorkühler, Kühler und Tiefkühler werden im Folgenden auch allgemein als Wärmetauscher bezeichnet.

Die Regelung bzw. Einstellung der Prozessgastemperatur in dem Kühler erfolgt vorzugsweise dadurch, dass dem aus dem Tiefkühler austretenden ersten Kühlmittelstrom ein weiterer Kälte- oder Wärmeträgerstrom zugeführt wird. Der weitere Kälte- oder Wärmeträgerstrom und der aus dem Tiefkühler austretende erste Kühlmittelstrom bilden dann den zweiten Kühlmittelstrom, der im Kühler in indirekten Wärmeaustausch mit dem Prozessgas tritt. Durch die Zuführung eines weiteres Kälte- oder Wärmeträgers können Temperatur und Menge des zweiten Kältemittelstroms entsprechend den gewünschten Anforderungen eingestellt werden. So kann beispielsweise durch Zuführung eines Kälteträgerstromes die Temperatur des zweiten Kältemittelstromes abgesenkt werden und umgekehrt durch Zuführung eines Wärmeträgers erhöht werden.

Die Zuführung eines Kälte- oder Wärmeträgerstromes zur Einstellung der Prozessgastemperatur kann in gleicher Weise beim Einsatz einer Kryokondensationsanlage mit Vorkühler, Kühler und Tiefkühler genutzt werden. Zur definierten Einstellung der Prozessgastemperatur im Vorkühler wird in diesem Fall dem aus dem Kühler austretenden zweiten Kühlmittelstrom der Kälte- oder Wärmeträger zugegeben und der so entstehende dritte Kühlmittelstrom durch den Vorkühler geleitet.

Bei der beschriebenen Verfahrensweise wird der Kälte- oder Wärmeträger direkt dem in den Kühler bzw. in den Vorkühler eintretenden Kältemittelstrom zugemischt oder zugegeben. Dies hat den Vorteil, dass der Kühler bzw. Vorkühler keine separaten Durchgänge zur Durchleitung des Kälte- oder Wärmeträgers benötigt. Soll der Kältemittelstrom nach der Kryokondensation einer anderen Verwendung zugeführt werden, beispielsweise zur Inertisierung eingesetzt werden, ist es in diesem Fall aber in der Regel notwendig, für den Kühlmittelstrom und den Kälte- oder Wärmeträger denselben Stoff zu verwenden, d.h. beispielsweise jeweils Stickstoff einzusetzen.

Ist es bei bestimmten Randbedingungen von Vorteil, einen von dem Kühlmittelstrom abweichenden Kälte- oder Wärmeträger zu verwenden, so ist es ebenso möglich, den Kälte- oder Wärmeträger getrennt von dem Kühlmittelstrom durch den Kühler bzw. Vorkühler zu leiten. Diese Verfahrensweise bringt hinsichtlich der Einstellung der Prozessgastemperatur im Vorkühler bzw. Kühler dieselben Vorteile mit sich. Allerdings ist es in diesem Fall notwendig, für den Kälte- oder Wärmeträger separate Durchgänge durch den Kühler bzw. Vorkühler vorzusehen.

Anstelle oder ergänzend zur Zuführung des weiteren Kälte- oder Wärmeträgers kann die Einstellung der Temperaturverhältnisse in dem Kühler bzw. Vorkühler von Vorteil auch dadurch erfolgen, dass die Menge des dem Kühler bzw. Vorkühler zugeführten Kühlmittelstroms eingestellt wird. Hierzu wird vorzugsweise nicht der gesamte aus dem Tiefkühler austretende erste Kühlmittelstrom dem Kühler zugeführt, sondern ein Teil des aus dem Tiefkühler austretenden ersten Kühlmittelstroms über einen Bypass an dem Kühler vorbeigeleitet. Im Kühler kann somit die Temperatur des Prozessgases über eine Regelung der Menge an zweitem Kühlmittelstrom gesteuert werden. In entsprechender Weise kann bei Verwendung eines Vorkühlers die Prozessgastemperatur im Vorkühler dadurch geregelt werden, dass ein Teil des aus dem Kühler austretenden zweiten Kühlmittelstroms über einen Bypass an dem Vorkühler vorbeigeführt wird.

Als Kälte- oder Wärmeträger kann ein auf entsprechender Temperatur befindliches gasförmiges oder flüssiges Medium, insbesondere gasförmiger oder flüssiger Stickstoff, eingesetzt werden. Es hat sich auch als günstig erwiesen, das aus dem Tiefkühler abgezogene und abgekühlte Prozessgas als Kälte- oder Wärmeträger in dem Kühler und/oder Vorkühler einzusetzen.

Von Vorteil werden die Prozessgastemperaturen in dem Vorkühler und/oder in dem Kühler und/oder in dem Tiefkühler so gewählt, dass sich in dem Vorkühler und/oder dem Kühler und dem Tiefkühler ausfrierendes Eis definiert auf den Vorkühler und/oder den Kühler und/oder den Tiefkühler verteilt. Die Eiskapazität der einzelnen Wärmetauscher, d.h. die Fähigkeit des Vorkühlers, Kühlers und Tiefkühlers ausfrierendes Wasser aufzunehmen, kann somit optimal genutzt werden und ein schnelles Zufrieren eines der Wärmetauscher - des Vorkühlers, des Kühlers oder des Tiefkühlers - wird verhindert. Dadurch wird die Standzeit der gesamten Kryokondensationsanlage deutlich erhöht. Ferner kann unter Umständen auf eine redundante Ausführung einzelner Wärmetauscher oder der gesamten Kryokondensationsanlage verzichtet werden, wodurch die Investitionskosten erheblich reduziert werden können.

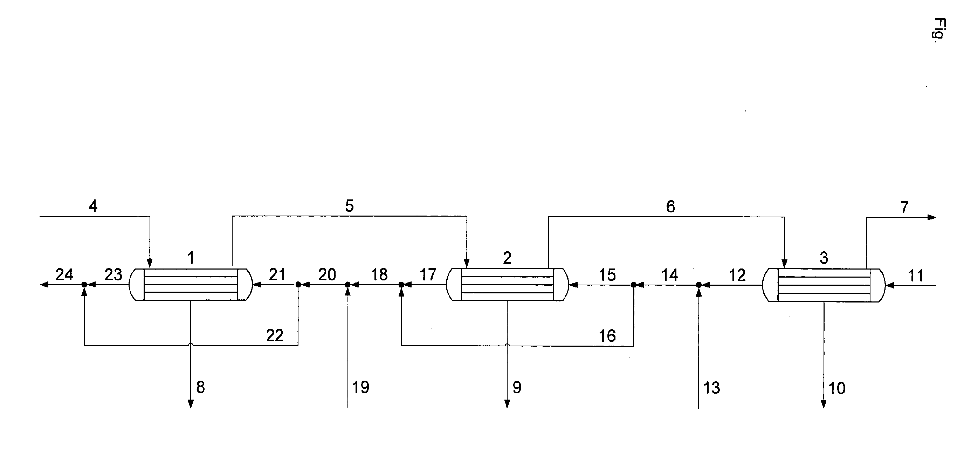

Die Erfindung sowie weitere vorteilhafte Ausgestaltungen der Erfindung sollen im Folgenden anhand der Figur näher erläutert werden. Hierbei zeigt die Figur das schematische Fließbild einer erfindungsgemäßen Anlage zur Kryokondensation.

Die in der Figur dargestellte Anlage weist einen Vorkühler 1, einen Kühler 2 und einen Tiefkühler 3 auf. Ein zu reinigender und abzukühlender Prozessgasstrom 4, 5, 6, 7 wird nacheinander durch den Vorkühler 1, den Kühler 2 und den Tiefkühler 3 geleitet und stufenweise abgekühlt. In jedem der drei Wärmetauscher 1, 2, 3 wird dabei ein Kondensat 8, 9, 10 mit jeweils unterschiedlicher Zusammensetzung gewonnen. Die drei Kondensate werden getrennt voneinander in drei separate, in der Zeichnung nicht dargestellte Kondensatbehälter geführt.

Die Abkühlung des Prozessgases 4, 5, 6 in den Wärmetauschern 1, 2, 3 erfolgt durch flüssigen Stickstoff 11, der zunächst dem Tiefkühler 3 zugeführt wird und anschließend die Wärmetauscher 2 und 1 durchläuft, wobei dieser verdampft und erwärmt wird. Zusätzlich werden zur Temperierung des Prozessgasstromes 4, 5 weitere Kälte-/Wärmeträgerstrom 13, 19 eingesetzt, wie im Folgenden näher erläutert wird.

Im Vorkühler 1 wird das Prozessgas 4 auf eine definierte Temperatur abgekühlt, wobei ein Kondensat 8 mit definierter Zusammensetzung gewonnen wird. Als Kühlmittelstrom wird der den Kühler 2 verlassende kalte gasförmige Stickstoff 17, 18 eingesetzt. Um die für die Kryokondensation notwendige Temperatur im Vorkühler 1 exakt einstellen zu können, wird dem kalten gasförmigen Stickstoff 18 flüssiger Stickstoff 19 beigemischt. Der durch die Beimischung neu entstandene dritte Kühlmittelstrom 20 kühlt das Prozessgas 4 im Vorkühler 1 auf die für die Kryokondensation notwendige Temperatur ab. Ohne Beimischung des Kälteträgers 19 wäre die erforderliche tiefe Prozessgastemperatur im Vorkühler 1 durch den den Kühler 2 verlassenden Kühlmittelstrom 17, 18 allein nicht zu erreichen.

Weist der den Kühler 2 verlassende zweite Kühlmittelstrom 17, 18 eine zu niedrige Temperatur auf, so kann dem Kühlmittelstrom 18 anstelle eines Kälteträgers auch ein Wärmeträger 19, z.B. warmer gasförmiger Stickstoff, zugemischt werden.

Alternativ und/oder zusätzlich zu der beschriebenen Zuführung eines Kälte- oder Wärmeträgers 19 kann auch nur ein Teilstrom 21 des Kühlmittelstroms 20 durch den Vorkühler 1 geleitet werden. Der verbleibende Teilstrom 22 wird in diesem Fall über einen Bypass an dem Vorkühler 1 vorbeigeleitet und anschließend mit dem den Vorkühler 1 verlassenden Kühlmittelstrom 23 wieder zusammengeführt.

Die Einhaltung der vorgegebenen Prozessgastemperatur im Vorkühler 1 erfolgt erfindungsgemäß über die Menge und/oder Temperatur an zudosiertem Kälte-/Wärmeträger 19 und/oder über die Regelung der Kühlmittelteilströme 21, 22.

Das Kondensat 8 wird aus dem Vorkühler 1 abgeführt und in einem in der Zeichnung nicht dargestellten ersten Kondensatbehälter gesammelt. Das Kondensat 8 kann dem Produktionsprozess dann beispielsweise an anderer Stelle wieder direkt zugeführt werden.

Durch die Zudosierung des Kälte- oder Wärmeträgers 19 werden außerdem Temperaturschwankungen im Prozessgas 4 ausgeglichen. Die Temperatur des den Vorkühler 1 verlassenden Prozessgases 5 kann damit konstant gehalten werden. Dies führt zu einem verbesserten Betriebsverhalten in allen Wärmetauschern 1, 2, 3 und damit zu einer Leistungssteigerung der gesamten Kryokondensationsanlage.

Nach der Vorkühlung im Vorkühler 1 wird das Prozessgas im Kühler 2 weiter auf eine definierte Temperatur heruntergekühlt, um ein zweites Kondensat 9 mit definierter Zusammensetzung zu erhalten. Als Kühlmittel wird der den Tiefkühler 3 verlassende gasförmige Stickstoff 12, 14 eingesetzt. Analog zu der oben im Zusammenhang mit dem Vorkühler 1 beschriebenen Verfahrensweise wird auch im Kühler 2 dem Kühlmittelstrom 12 ein Kälte- oder Wärmeträger 13, beispielsweise warmer gasförmiger Stickstoff, beigefügt, um eine definierte Prozessgastemperatur im Kühler 2 einzustellen.

Alternativ und/oder zusätzlich zur Zuführung des Kälte- oder Wärmeträgers 13 kann auch wieder nur ein Teilstrom 15 des Kühlmittelstroms 14 durch den Kühler 2 geleitet werden und der verbleibende Teilstrom 16 über einen Bypass an dem Kühler 2 vorbeigeführt werden.

Auch im Kühler 2 erfolgt damit die Regelung der Prozessgastemperatur über die Temperatur und/oder Menge an zusätzlich eingespeisten Kälte- oder Wärmeträger 13 und/oder über die Aufspaltung des Kühlmittelstroms 14 in die Teilströme 15, 16.

Das durch Kondensation aus dem Prozessgas 5 in dem Kühler 2 entstehende Kondensat 9 wird aus dem Kühler 2 abgezogen und in einem zweiten Kondensatbehälter gesammelt.

Im Tiefkühler 3 wird das Prozessgas 6 auf seine tiefste Temperatur abgekühlt und Kondensat 10 gewonnen. Als Kühlmittel 11 wird flüssiger oder tiefkalter gasförmiger Stickstoff eingesetzt. Die Prozessgastemperatur im Tiefkühler 3 richtet sich nach den Anforderungen, die an die Zusammensetzung des gereinigten Prozessgases 7 und/oder an die Zusammensetzung des Kondensates 10 gestellt werden. Die Einhaltung der vorgegebenen Prozessgastemperatur im Tiefkühler 3 erfolgt über die Menge und/oder Temperatur an zudosiertem Kühlmittel 11.

Das Kondensat 10 wird aus dem Tiefkühler 3 abgeführt und in einem in der Zeichnung nicht dargestellten dritten Kondensatbehälter getrennt von den Kondensaten 8, 9 gesammelt.

Bei der erfindungsgemäßen fraktionierten Kryokondensation wird in den drei Wärmetauschern 1, 2, 3 die Temperatur des Prozessgases 5, 6, 7 jeweils durch Zudosierung von Kälte- oder Wärmeträgern 11, 13, 19 und/oder durch eine Bypassführung der Kühlmittelströme 16, 22 genau eingestellt. Von der eingestellten Prozessgastemperatur in den Wärmetauschern 1, 2, 3 hängt die Zusammensetzung der gewonnenen Kondensate 8, 9, 10 ab. Die Kondensate 8, 9, 10 können so in einer geforderten Reinheit gewonnen werden und ohne weitere Reinigungsschritte an anderer Stelle eingesetzt werden. Hierzu werden die Kondensate 8, 9, 10 getrennt voneinander in drei unterschiedlichen Kondensatbehältern gesammelt.

### Ausführungsbeispiel:

Ein Prozessgas, welches Wasser, Vinylacetat, Ethylen und Stickstoff in der unten aufgeführten Zusammensetzung enthält, soll durch fraktionierte Kryokondensation so aufgetrennt werden, dass Vinylacetat und Ethylen in hoher Reinheit zur Verfügung stehen. Für eine direkte Wiederverwertung der beiden Komponenten Vinylacetat und Ethylen muss das Vinylacetat mit mindestens 96 Massen-% und das Ethylen mit mindestens 99 Massen-% im jeweiligen Kondensat vorliegen.

Das Prozessgas hat folgende Zusammensetzung:

| Stoffkomponente | Siedepunkt bei 1 bar (a) | Gefrierpunkt | Massen-% |
|---|---|---|---|
| Wasser | +100 °C | 0 °C | 2 % |
| Vinylacetat | + 73 °C | -100 °C | 25 % |
| Ethylen | -104 °C | -169 °C | 72 % |
| Stickstoff | -196°C | -210°C | 1 % |

Um die vorgeschriebenen Reinheiten für Vinylacetat und Ethylen in den jeweiligen Kondensaten 8, 9, 10 zu erreichen, muss jeweils in den drei Wärmetauschern 1, 2, 3 eine genau definierte Prozessgastemperatur eingestellt werden. Die gewonnenen Kondensate 8, 9, 10 werden dann getrennt voneinander in drei Kondensatbehältern gesammelt.

Im Beispielsprozess ist eine Prozessgastemperatur im Tiefkühler 3 von -135 °C notwendig, da nach gesetzlicher Vorgabe im Prozessgas 7 nur insgesamt 100 g/h an Vinylacetat und Ethylen emittiert werden dürfen.

Zu Vergleichzwecken wird der Kryokondensationsprozess zunächst ohne Zudosierung von zusätzlichen Kälte-/ Wärmeträgern 13, 19 und ohne Bypassschaltungen 16, 22 betrieben. Dabei stellen sich folgende Temperaturen für das Prozessgas 5, 6, 7 in den Wärmetauschern 1, 2, 3 und folgende Zusammensetzungen für die Kondensate 8, 9, 10 ein:

| Wärmetauscher | Temperatur in °C Prozessgas | Kondensat in Massen-% Vinylacetat, Ethylen |
|---|---|---|
| Vorkühler (1) | +20,4 | < 0,1 Vinylacetat + Ethylen |
| Kühler (2) | -44,0 | 92,7 Vinylacetat |
| Tiefkühler (3) | -135,0 | 98,6 Ethylen |

Bei diesem Kryokondensationsprozess liegen in den Kondensaten 8, 9, 10 weder das Vinylacetat noch das Ethylen in der notwendigen Reinheit von mindestens 96 % bzw. von mindestens 99 % vor, welche für eine Wiederverwertung der beiden Komponenten notwendig wären. Alle Kondensate 8, 9, 10 müssten daher zusätzlich gereinigt oder entsorgt werden.

Erfindungsgemäß werden nun gezielt flüssiger Stickstoff 19 und warmer gasförmiger Stickstoff 13 den Kühlmittelströmen 18, 12 zudosiert, um die Prozessgastemperatur in dem Vorkühler 1 und dem Kühler 2 definiert einstellen zu können. Die folgende Tabelle zeigt die im Vorkühler 1, Kühler 2 und Tiefkühler 3 eingestellten Prozessgastemperaturen und die Reinheiten der bei diesem Verfahren gewonnenen Kondensate 8, 9, 10:

| Wärmetauscher | Temperatur in °C Prozessgas | Kondensat in Massen-% Vinylacetat, Ethylen |
|---|---|---|
| Vorkühler (1) | +6,8 | 7,7 Vinylacetat, < 0,1 Ethylen |
| Kühler (2) | -49,7 | 96,0 Vinylacetat |
| Tiefkühler (3) | -135,0 | 99,1 Ethylen |

Durch die erfindungsgemäß genaue Temperatureinstellung in jedem Wärmetauscher 1, 2, 3 können 99 % der im Prozessgas enthaltenen Mengen an Vinylacetat und Ethylen in der notwendigen Reinheit zurückgewonnen und direkt in den weiteren Produktionsprozess eingespeist werden. In dem oben aufgezeigten Beispielprozess werden ausschließlich gasförmiger und flüssiger Stickstoff als Kühlmittelstrom 11 bzw. Kälte-/Wärmeträger 13, 19 verwendet, so dass der den Vorkühler 1 verlassende gasförmige Stickstoff 24 vollständig, beispielsweise für eine Inertisierung, weiter genutzt werden kann. Dadurch reduzieren sich die Betriebskosten für diesen Kryokondensationsprozess.

Es ist ebenso möglich, das den Tiefkühler 3 verlassende abgekühlte Prozessgas 7 als Kälteträger für den Kühler 2 und/oder den Vorkühler 1 zu nutzen. Gegebenenfalls können auch noch weitere Kälte-/Wärmeträger 13, 19 zudosiert werden. Da der Prozessgasstrom 7 allerdings noch Restverunreinigungen enthält, kann der am Vorkühler 1 abgezogene Kühlmittelstrom 24 dann in der Regel nicht zur Inertisierung weiterverwendet werden.

Genügt in einem bestehenden Kryokondensationsprozess das in den Wärmetauschern 1, 2, 3 anfallende Kondensat 8, 9, 10 bereits den Reinheitsanforderungen, so können durch die erfindungsgemäße fraktionierte Kryokondensation die in den Produktionsprozess zurückzuführenden Kondensatmengen 8, 9, 10 maximiert werden. Dies ist möglich, da sich über die einstellbare Prozessgastemperatur in den Wärmetauschern 1, 2, 3 sowohl die Kondensat-Zusammensetzungen als auch die Kondensatmengen steuern lassen.

Enthält das zurückgeführte Kondensat 8, 9, 10 Komponenten, die sich im Produktionsprozess inert verhalten, so werden sich diese Komponenten im Prozessgas anreichern. In diesem Fall kann der Inertgasanteil des Stickstoffs im Prozessgasstrom reduziert werden, um einen konstanten Gesamtinertgasanteil zu gewährleisten.

Die erfindungsgemäße fraktionierte Kryokondensation ist besonders wirtschaftlich, wenn die kondensierten und wiedereinsetzbaren Komponenten des Prozessgases hochwertig sind und der als Kühlmittel eingesetzte Stickstoff komplett weiterverwendet werden kann.

Die Erfindung weist gegenüber den bekannten Kryokondensationsverfahren wesentliche Vorteile auf:
- Bei der erfindungsgemäßen Kryokondensation kann die Prozesstemperatur in den einzelnen Wärmetauschern, d.h. in dem Vorkühler, in dem Kühler und in dem Tiefkühler, durch die Zudosierung von Kälte-/Wärmeträgern oder durch geeignete Bypassführung von Teilströmen des Kühlmittels definiert eingestellt werden.
- Das Regelungskonzept zur Einhaltung der Prozessgastemperatur durch Zudosierung von Kälte-/Wärmeträgern ist einfach aufgebaut, da jeweils nur über einen Wärmetauscher geregelt wird.
- Über die genaue Einstellung der Prozessgastemperatur in den Wärmetauschern werden definierte Kondensatzusammensetzungen in den einzelnen Wärmetauschern erreicht.
- Die im Prozessgas enthaltenen leichtflüchtigen Komponenten werden voneinander getrennt und in separaten Kondensatbehältern gesammelt, was mit anderen Verfahren, wie beispielsweise Adsorptions- oder Membranverfahren, nur mit großem Aufwand oder gar nicht möglich ist.
- Die leichtflüchtigen Komponenten des Prozessgasstromes werden in hoher Reinheit zurückgewonnen und können direkt ohne weitere Reinigungsschritte in den Produktionsprozess zurückgeführt werden. Liegen die leichtflüchtigen Komponenten in den Kondensaten bereits bei Verwendung der herkömmlichen Verfahren in der geforderten Reinheit vor, so kann über die erfindungsgemäße genaue Temperatureinstellung im Prozessgas in den Wärmetauschern die Kondensatmenge für jede leichtflüchtige Komponente maximiert werden. Die Wirtschaftlichkeit des Kryokondensationsprozesses wird dadurch wesentlich erhöht.
- Die Reinigung des Prozessgases erfolgt gemäß den gesetzlichen Vorgaben bei einer gleichzeitigen Trennung der im Prozessgas enthaltenen Stoffkomponenten in hoher Reinheit.
- Das Anwendungsgebiet der Kryokondensation wird erfindungsgemäß erweitert und kann andere Trennverfahren, wie Adsorptions- oder Membranverfahren, ablösen.
- Die Wirtschaftlichkeit von bestehenden Kryokondensationsprozessen wird erhöht, weil sich die wiederverwertbaren Kondensatmengen mit hochreinen Stoffkomponenten erhöhen, ohne dass eine aufwändige Reinigung notwendig ist.
- Wird ausschließlich Stickstoff als Kälte-/Wärmeträger eingesetzt, so kann dieser komplett weiterverwendet werden und beispielsweise zur Inertisierung eingesetzt werden, wodurch die Betriebskosten der Kryokondensationsanlage niedrig gehalten werden.
- Kommt es durch die Kondensatrückführung zu einer Anreicherung von inerten Komponenten im Prozessgas, so kann durch die Reduzierung des Stickstoffanteils im Prozessgas der Gesamtinertgasanteil im Prozessgas konstant gehalten werden.
- Temperaturschwankungen im Prozessgas werden durch die Temperatureinstellung im ersten Wärmetauscher, in oben genanntem Beispiel dem Vorkühler 1, ausgeglichen. Durch die definierte und konstante Prozessgastemperatur nach dem ersten Wärmetauscher erhöht sich die Leistungsfähigkeit der nachfolgenden Wärmetauscher und damit die Leistungsfähigkeit des gesamten Kryokondensationsprozesses.
- Durch die unabhängige Einstellung der Prozessgastemperatur für jeden einzelnen Wärmetauscher kann eine auftretende Eisbildung in den Wärmetauschern beeinflusst werden. Die anfallende Eismenge lässt sich somit gezielt auf die Wärmetauscher verteilen, wodurch die Standzeit der Kryokondensationsanlage erhöht wird.
- Die Flexibilität von bestehenden Kryokondensationsanlagen wird erhöht, da durch die Zudosierung von zusätzlichen Kälte-/Wärmeträgern die Leistungsfähigkeit der einzelnen Wärmetauscher gezielt gesteuert werden kann. Eine Anpassung der Kryokondensationsanlage an verschiedene Betriebsbedingungen mit unterschiedlichen Prozessgasen ist leichter möglich.

## Patentansprüche

1. Verfahren zum Kühlen und/oder Reinigen eines Prozessgases,
• wobei das Prozessgas (5) in einem Kühler (2) in indirektem Wärmeaustausch mit einem zweiten Kühlmittelstrom (15) vorgekühlt wird,
• wobei in dem Kühler (2) entstehendes Kondensat (9) aus dem Kühler (2) abgezogen wird,
• und wobei das aus dem Kühler (2) austretende Prozessgas (6) in einem Tiefkühler (3) in indirektem Wärmeaustausch mit einem ersten Kühlmittelstrom (11) gekühlt wird,
• wobei in dem Tiefkühler (3) entstehendes Kondensat (10) aus dem Tiefkühler (3) abgezogen wird,
• und wobei zumindest ein Teil (15) des aus dem Tiefkühler (3) austretenden ersten Kühlmittelstroms (12) dem Kühler (2) zugeführt wird, um zumindest einen Teil des zweiten Kühlmittelstroms (15) zu bilden,
**dadurch gekennzeichnet, dass**
• der zweite Kühlmittelstrom (15) so geregelt wird, dass in dem Kühler (2) eine vorgegebene Prozessgastemperatur eingehalten wird und dass
• das aus dem Kühler (2) abgezogene Kondensat (9) und das aus dem Tiefkühler (3) abgezogene Kondensat (10) getrennt voneinander gesammelt werden.

2. Verfahren nach Anspruch 1, **dadurch gekennzeichnet, dass**
• das Prozessgas (4) in einem Vorkühler (1) in indirektem Wärmeaustausch mit einem dritten Kühlmittelstrom (21) vorgekühlt wird,
• wobei in dem Vorkühler (1) entstehendes Kondensat (8) aus dem Vorkühler (1) abgezogen wird,
• und wobei das aus dem Vorkühler (1) austretende Prozessgas (5) dem Kühler (2) zugeführt wird,
• und wobei zumindest ein Teil des aus dem Kühler (2) austretenden zweiten Kühlmittelstroms (17) dem Vorkühler (1) zugeführt wird, um zumindest einen Teil des dritten Kühlmittelstroms (21) zu bilden,
• und wobei der dritte Kühlmittelstrom (21) so geregelt wird, dass in dem Vorkühler (1) eine vorgegebene Prozessgastemperatur eingehalten wird.

3. Verfahren nach einem der Ansprüche 1 oder 2, **dadurch gekennzeichnet, dass** dem Kühler (2) und / oder dem Vorkühler (1) ein Kälte- oder Wärmeträger (13, 19) zugeführt und das Prozessgas (4, 5) in indirektem Wärmeaustausch mit dem Kälte- oder Wärmeträger (13, 19) gekühlt wird.

4. Verfahren nach Anspruch 3, **dadurch gekennzeichnet, dass** der Kälte- oder Wärmeträger (13, 19) einen Teil des zweiten und / oder dritten Kühlmittelstroms (15, 21) bildet.

5. Verfahren nach einem der Ansprüche 1 bis 4, **dadurch gekennzeichnet, dass** ein Teil (16) des aus dem Tiefkühler (3) austretenden ersten Kühlmittelstroms (12) über einen Bypass an dem Kühler (2) vorbeigeleitet wird.

6. Verfahren nach einem der Ansprüche 2 bis 5, **dadurch gekennzeichnet, dass** ein Teil (22) des aus dem Kühler (2) austretenden zweiten Kühlmittelstroms (17) über einen Bypass an dem Vorkühler (1) vorbeigeleitet wird.

7. Verfahren nach einem der Ansprüche 2 bis 6, **dadurch gekennzeichnet, dass** in dem Vorkühler (1) entstehendes Kondensat (8) aus dem Vorkühler (1) abgezogen wird und dass das aus dem Vorkühler (1) abgezogene Kondensat (8), das aus dem Kühler (2) abgezogene Kondensat (9) und das aus dem Tiefkühler (3) abgezogene Kondensat (10) getrennt voneinander gesammelt werden.

8. Verfahren nach einem der Ansprüche 3 bis 7, **dadurch gekennzeichnet, dass** dem Kühler (2) und/oder dem Vorkühler (1) aus dem Kühler (2) und/oder aus dem Tiefkühler (3) abgezogenes Prozessgas als Kälte- oder Wärmeträger (13, 19) zugeführt werden.

9. Verfahren nach einem der Ansprüche 1 bis 8, **dadurch gekennzeichnet, dass** die für den Vorkühler (1) und/oder den Kühler (2) vorgegebenen Prozessgastemperaturen so gewählt werden, dass in dem Vorkühler (1) und/oder dem Kühler (2) und dem Tiefkühler (3) ausfrierendes Eis sich definiert auf den Vorkühler (1) und/oder den Kühler (2) und den Tiefkühler (3) verteilt.

10. Verfahren nach einem der Ansprüche 1 bis 9, **dadurch gekennzeichnet, dass** flüssiger Stickstoff als erster Kühlmittelstrom (11) eingesetzt wird.

11. Vorrichtung zum Kühlen und/oder Reinigen eines.Prozessgases, umfassend
• einen als indirekten Wärmetauscher ausgeführten Kühler (2) mit einer Prozessgaszuleitung (5) und einer Prozessgasableitung (6) und mit einer Kühlmittelzuleitung (15) und einem Kühlmittelabzug (17),
• einen als indirekten Wärmetauscher ausgeführten Tiefkühler (3) mit einer Prozessgaszuleitung (6) und einer Prozessgasableitung (7) und mit einer Kühlmittelzuleitung (11) und einem Kühlmittelabzug (12),
• wobei die Prozessgasableitung (6) des Kühlers (2) mit der Prozessgaszuleitung (6) des Tiefkühlers (3) verbunden ist,
• wobei der Kühlmittelabzug (12) des Tiefkühlers (3) mit der Kühlmittelzuleitung (15) des Kühlers (2) verbunden ist,
**dadurch gekennzeichnet, dass**
der Tiefkühler (3) und der Kühler (2) mit einer Kondensatableitung (9, 10) zum Abziehen von in dem Tiefkühler (3) bzw. in dem Kühler (2) entstehendem Kondensat (9, 10) versehen sind,
wobei die Kondensatableitung (10) des Tiefkühlers (3) mit einem ersten Kondensatbehälter und die Kondensatableitung (9) des Kühlers (2) mit einem zweiten Kondensatbehälter verbunden sind.

12. Vorrichtung nach Anspruch 11, **dadurch gekennzeichnet, dass**
• ein als indirekter Wärmetauscher ausgeführter Vorkühler (1) mit einer Prozessgaszuleitung (4) und einer Prozessgasableitung (5) und mit einer Kühlmittelzuleitung (21) und einem Kühlmittelabzug (23) vorgesehen ist,
• der Vorkühler (1) mit einer Kondensatableitung (8) zum Abziehen von in dem Vorkühler (1) entstehendem Kondensat (8) versehen ist,
• wobei die Kondensatableitung (8) des Vorkühlers (1) mit einem dritten Kondensatbehälter ist.

13. Vorrichtung nach einem der Ansprüche 11 oder 12, **dadurch gekennzeichnet, dass** ein die Kühlmittelzuleitung (15) des Kühlers (2) und den Kühlmittelabzug (17) des Kühlers (2) verbindender Bypass (16) um den Kühler (2) und/oder ein die Kühlmittelzuleitung (21) des Vorkühlers (1) und den Kühlmittelabzug (23) des Vorkühlers (1) verbindender Bypass (22) um den Vorkühler (1) vorgesehen sind.

## Geänderte Patentansprüche

### Geänderte Patentansprüche gemäss Regel 137(2) EPÜ.

**1.** Verfahren zum Kühlen und/oder Reinigen eines Prozessgases,
• wobei das Prozessgas (5) in einem Kühler (2) in indirektem Wärmeaustausch mit einem zweiten Kühlmittelstrom (15) vorgekühlt wird,
• wobei in dem Kühler (2) entstehendes Kondensat (9) aus dem Kühler (2) abgezogen wird,
• und wobei das aus dem Kühler (2) austretende Prozessgas (6) in einem Tiefkühler (3) in indirektem Wärmeaustausch mit einem ersten Kühlmittelstrom (11) gekühlt wird,
• wobei in dem Tiefkühler (3) entstehendes Kondensat (10) aus dem Tiefkühler (3) abgezogen wird,
• und wobei zumindest ein Teil (15) des aus dem Tiefkühler (3) austretenden ersten Kühlmittelstroms (12) dem Kühler (2) zugeführt wird, um zumindest einen Teil des zweiten Kühlmittelstroms (15) zu bilden,
**dadurch gekennzeichnet, dass**
• der zweite Kühlmittelstrom (15) so geregelt wird, dass in dem Kühler (2) eine vorgegebene Prozessgastemperatur eingehalten wird, wobei die Regelung durch die
• Zufuhr eines Kälte- oder Wärmeträgers (13) in den zweiten Kühlmittelstrom und/oder
• durch das Vorbeileiten eines Teils (16) des aus dem Tiefkühler (3) austretenden ersten Kühlmittelstromes (12) am Kühler (2) über einen Bypass erfolgt, und dass
• das aus dem Kühler (2) abgezogene Kondensat (9) und das aus dem Tiefkühler (3) abgezogene Kondensat (10) getrennt voneinander gesammelt werden.

**2.** Verfahren nach Anspruch 1, **dadurch gekennzeichnet, dass**
• das Prozessgas (4) in einem Vorkühler (1) in indirektem Wärmeaustausch mit einem dritten Kühlmittelstrom (21) vorgekühlt wird,
• wobei in dem Vorkühler (1) entstehendes Kondensat (8) aus dem Vorkühler (1) abgezogen wird,
• und wobei das aus dem Vorkühler (1) austretende Prozessgas (5) dem Kühler (2) zugeführt wird,
• und wobei zumindest ein Teil des aus dem Kühler (2) austretenden zweiten Kühlmittelstroms (17) dem Vorkühler (1) zugeführt wird, um zumindest einen Teil des dritten Kühlmittelstroms (21) zu bilden,
• und wobei der dritte Kühlmittelstrom (21) so geregelt wird, dass in dem Vorkühler (1) eine vorgegebene Prozessgastemperatur eingehalten wird.

**3.** Verfahren nach Anspruch 2, **dadurch gekennzeichnet, dass** dem Vorkühler (1) ein Kälte- oder Wärmeträger (19) zugeführt und das Prozessgas (4) in indirektem Wärmeaustausch mit dem Kälte- oder Wärmeträger (19) gekühlt wird.

**4.** Verfahren nach einem der Ansprüche 1 bis 3, **dadurch gekennzeichnet, dass** der Kälte- oder Wärmeträger (13, 19) einen Teil des zweiten und / oder dritten Kühlmittelstroms (15, 21) bildet.

**5.** Verfahren nach einem der Ansprüche 2 bis 4, **dadurch gekennzeichnet, dass** ein Teil (22) des aus dem Kühler (2) austretenden zweiten Kühlmittelstroms (17) über einen Bypass an dem Vorkühler (1) vorbeigeleitet wird.

**6.** Verfahren nach einem der Ansprüche 2 bis 5, **dadurch gekennzeichnet, dass** in dem Vorkühler (1) entstehendes Kondensat (8) aus dem Vorkühler (1) abgezogen wird und dass das aus dem Vorkühler (1) abgezogene Kondensat (8), das aus dem Kühler (2) abgezogene Kondensat (9) und das aus dem Tiefkühler (3) abgezogene Kondensat (10) getrennt voneinander gesammelt werden.

**7.** Verfahren nach einem der Ansprüche 1 bis 6, **dadurch gekennzeichnet, dass** dem Kühler (2) und/oder dem Vorkühler (1) aus dem Kühler (2) und/oder aus dem Tiefkühler (3) abgezogenes Prozessgas als Kälte- oder Wärmeträger (13, 19) zugeführt werden.

**8.** Verfahren nach einem der Ansprüche 1 bis 7, **dadurch gekennzeichnet, dass** die für den Vorkühler (1) und/oder den Kühler (2) vorgegebenen Prozessgastemperaturen so gewählt werden, dass in dem Vorkühler (1) und/oder dem Kühler (2) und dem Tiefkühler (3) ausfrierendes Eis sich definiert auf den Vorkühler (1) und/oder den Kühler (2) und den Tiefkühler (3) verteilt.

**9.** Verfahren nach einem der Ansprüche 1 bis 8, **dadurch gekennzeichnet, dass** flüssiger Stickstoff als erster Kühlmittelstrom (11) eingesetzt wird.

**10.** Vorrichtung zum Kühlen und/oder Reinigen eines Prozessgases, umfassend
• einen als indirekten Wärmetauscher ausgeführten Kühler (2) mit einer Prozessgaszuleitung (5) und einer Prozessgasableitung (6) und mit einer Kühlmittelzuleitung (15) und einem Kühlmittelabzug (17),
• einen als indirekten Wärmetauscher ausgeführten Tiefkühler (3) mit einer Prozessgaszuleitung (6) und einer Prozessgasableitung (7) und mit einer Kühlmittelzuleitung (11) und einem Kühlmittelabzug (12),
• wobei die Prozessgasableitung (6) des Kühlers (2) mit der Prozessgaszuleitung (6) des Tiefkühlers (3) verbunden ist,
• wobei der Kühlmittelabzug (12) des Tiefkühlers (3) mit der Kühlmittelzuleitung (15) des Kühlers (2) verbunden ist,
**dadurch gekennzeichnet, dass**
der Tiefkühler (3) und der Kühler (2) mit einer Kondensatableitung (9, 10) zum Abziehen von in dem Tiefkühler (3) bzw. in dem Kühler (2) entstehendem Kondensat (9, 10) versehen sind,
wobei die Kondensatableitung (10) des Tiefkühlers (3) mit einem ersten Kondensatbehälter und die Kondensatableitung (9) des Kühlers (2) mit einem zweiten Kondensatbehälter verbunden sind, und
• ein die Kühlmittelzuleitung (15) des Kühlers (2) und den Kühlmittelabzug (17) des Kühlers (2) verbindender Bypass (16) um den Kühler (2) und/oder
• eine Zuführung (13) für einen Kälte- oder Wärmeträger in die Kühlmittelzuleitung (15) des Kühlers (2) vorgesehen sind.

**11.** Vorrichtung nach Anspruch 11, **dadurch gekennzeichnet, dass**
• ein als indirekter Wärmetauscher ausgeführter Vorkühler (1) mit einer Prozessgaszuleitung (4) und einer Prozessgasableitung (5) und mit einer Kühlmittelzuleitung (21) und einem Kühlmittelabzug (23) vorgesehen ist,
• der Vorkühler (1) mit einer Kondensatableitung (8) zum Abziehen von in dem Vorkühler (1) entstehendem Kondensat (8) versehen ist,
• wobei die Kondensatableitung (8) des Vorkühlers (1) mit einem dritten Kondensatbehälter ist.

**12.** Vorrichtung nach einem der Ansprüche 10 oder 11, **dadurch gekennzeichnet, dass** ein die Kühlmittelzuleitung (21) des Vorkühlers (1) und den Kühlmittelabzug (23) des Vorkühlers (1) verbindender Bypass (22) um den Vorkühler (1) vorgesehen ist.
